# EUROPEAN PATENT APPLICATION

(11) **EP 4 699 869 A1**
(43) Date of publication of application: **25.02.2026**
(21) Application number: 25800693.1
(22) Date of filing: 18.04.2025
(51) Int. Cl.: B60R 16/03

(54) **VEHICLE POWER MANAGEMENT METHOD AND APPARATUS, VEHICLE, AND STORAGE MEDIUM**

(30) Priority: 17.06.2024 CN 202410778887
(71) Applicant: Chery Automobile Co., Ltd., Wuhu, Anhui 241006 (CN); Lion Automotive Technologies Nanjing Co., Ltd., Nanjing, Jiangsu 210046 (CN); Wuhu Lion Automotive Technologies Co., Ltd., Wuhu, Anhui 241006 (CN)
(72) Inventor: HE, Lei, Wuhu, Anhui 241006 (CN); CHEN, Jialing, Wuhu, Anhui 241006 (CN)
(74) Representative: Yang, Shu
(86) International application number: PCT/CN2025/089868
(87) International publication number: WO 2025/260955

(57) **Abstract**

Disclosed are a method and an apparatus for power management for a vehicle, a vehicle, and a storage medium, which relate to the field of vehicle technologies. The method includes: receiving a translated raw voltage signal and a translated bus power signal of the vehicle; determining, based on the translated raw voltage signal and the translated bus power signal, a power state matching the raw voltage signal and the bus power signal; transmitting the power state to at least one software management module in the vehicle via a message publishing and subscribing mechanism; and controlling, by the at least one software management module and based on the power state of the vehicle, corresponding software modules respectively to execute operations matching the power state. According to the method, the software modules in the vehicle are managed in a distributed manner by different software management modules, and each software management module needs to manage only a small quantity of software modules, such that issues are reduced, and the stability of the in the vehicle and the safety of vehicle operation are ensured.

## Description

The present disclosure is based on and claims priority to Chinese Patent Application No. 202410778887.0, filed on June 17, 2024 and entitled "METHOD AND APPARATUS FOR DISTRIBUTED POWER MANAGEMENT FOR VEHICLE, VEHICLE, AND STORAGE MEDIUM", the disclosure of which is herein incorporated by reference in its entirety.

### TECHNICAL FIELD

The present disclosure relates to the field of vehicle technologies, and in particular, relates to a method and an apparatus for power management for a vehicle, a vehicle, and a storage medium.

### BACKGROUND

Power management is an important part in an electronic system, and its reliability is a necessary condition for ensuring a stable operation of the electronic system. In a vehicle cockpit system, some software modules are associated with corresponding power management module. Since the operating states of these software modules affect the driving safety, designs of software and hardware for a power management system are critical for any environmental scenario.

In some practices, a power management module has been designed using software to provide "centralized" management on the power states of all software modules involved in the cockpit system.

However, while the "centralized" management may resolve complex power state management issues of the cockpit system, some disadvantages are introduced. For example, the power management module needs to manage the power states of all software modules in the vehicle, which places an excessive workload burden on the module and is prone to issues, potentially leading to chaotic power state management across the entire cockpit system.

### SUMMARY

Embodiments of the present disclosure provide a method and an apparatus for power management for a vehicle, a vehicle, and a storage medium. Software modules in the vehicle are managed in a distributed manner by different software management modules, and each software management module needs to manage only a small quantity of software modules, such that issues are reduced, and the stability of the power management system in the vehicle and the safety of vehicle operation are ensured. The technical solutions are as follows.

In one aspect, a method for power management for a vehicle is provided. The method includes:
receiving a translated raw voltage signal and a translated bus power signal of the vehicle;
determining, based on the translated raw voltage signal and the translated bus power signal, a power state matching the raw voltage signal and the bus power signal;
transmitting the power state to at least one software management module in the vehicle via a message publishing and subscribing mechanism, wherein the at least one software management module is configured to manage operating states of software modules in the vehicle; and
controlling, by the at least one software management module and based on the power state of the vehicle, the corresponding software modules respectively to execute operations matching the power state.

In some embodiments, prior to receiving the translated raw voltage signal and the translated bus power signal of the vehicle, the method further includes:
acquiring a signal trigger result of the vehicle, wherein the signal trigger result is used to indicate whether the raw voltage signal and the bus power signal of the vehicle are triggered; and
acquiring the translated raw voltage signal and the translated bus power signal by translating, by a microcontroller unit (MCU), the raw voltage signal and the bus power signal in the case where the signal trigger result indicates that the raw voltage signal and the bus power signal are triggered.

In some embodiments, prior to determining, based on the translated raw voltage signal and the translated bus power signal, the power state matching the raw voltage signal and the bus power signal, the method further includes:
classifying the software modules running on the vehicle to acquire at least one category; and
configuring a software management module for software modules of each category in the at least one category, wherein each software management module is configured to manage an operating state of software modules in a corresponding category in the power state.

In some embodiments, the power state matching the raw voltage signal and the bus power signal is determined by a power state machine in the vehicle, and the method further includes:
creating a message publishing module based on the message publishing and subscribing mechanism; and
establishing a signal connection between the power state machine and the message publishing module, and transmitting, upon a successful signal connection, the power state determined by the power state machine to the message publishing module.

In some embodiments, the method further includes:
building a broadcast mechanism for the power state; and
transmitting the power state to the at least one software management module in the vehicle via the message publishing and subscribing mechanism includes:
broadcasting the power state to the at least one software management module in the vehicle based on the broadcast mechanism and the message publishing and subscribing mechanism.

In some embodiments, upon controlling, by the at least one software management module and based on the power state of the vehicle, the corresponding software modules respectively to execute the operations matching the power state, the method further includes:
determining, for any software module managed by the at least one software management module, an execution status of the any software module based on an execution result and an expected result of the any software module, wherein the execution status of the any software module is used to indicate whether execution of the any software module meets a corresponding expected result; and
recording the execution result of the any software module in the case where the execution status of the any software module indicates that the execution of the any software module meets the corresponding expected result.

In some embodiments, the method further includes:
correcting the any software module in the case where the execution status of the any software module indicates that the execution of the any software module does not meet the corresponding expected result, continuing, upon successful correction, to control, by the at least one software management module corresponding to the any software module, the any software module to execute an operation matching the power state, and recording the execution result of the any software module.

In another aspect, an apparatus for power management for a vehicle is provided. The apparatus includes:
a receiving module, configured to receive a translated raw voltage signal and a translated bus power signal of the vehicle;
a determining module, configured to determine, based on the translated raw voltage signal and the translated bus power signal, a power state matching the raw voltage signal and the bus power signal;
a transmitting module, configured to transmit the power state to at least one software management module in the vehicle via a message publishing and subscribing mechanism, wherein the at least one software management module is configured to manage operating states of software modules in the vehicle; and
a controlling module, configured to control, by the at least one software management module and based on the power state of the vehicle, the corresponding software modules respectively to execute operations matching the power state.

In some embodiments, the apparatus further includes:
a translating module, configured to acquire a signal trigger result of the vehicle, wherein the signal trigger result is used to indicate whether the raw voltage signal and the bus power signal of the vehicle are triggered; and acquire the translated raw voltage signal and the translated bus power signal by translating, by an MCU, the raw voltage signal and the bus power signal in the case where the signal trigger result indicates that the raw voltage signal and the bus power signal are triggered.

In some embodiments, the apparatus further includes:
a configuring module, configured to create a message publishing module based on the message publishing and subscribing mechanism; and establish a signal connection between a power state machine and the message publishing module, and transmit, upon a successful signal connection, the power state determined by the power state machine to the message publishing module.

In some embodiments, the apparatus further includes:
a building module, configured to build a broadcast mechanism for the power state; and
the transmitting module, further configured to broadcast the power state to the at least one software management module in the vehicle based on the broadcast mechanism and the message publishing and subscribing mechanism.

In some embodiments, the apparatus further includes:
a processing module, configured to correct the software module in the case where an execution status of the software module indicates that the execution of the software module does not meet a corresponding expected result; and
the controlling module, further configured to continue, upon successful correction, to control, by the at least one software management module corresponding to the software module, the software module to execute an operation matching the power state, and record the execution result of the software module.

In another aspect, a vehicle is provided. The vehicle includes: a memory, a processor, and one or more computer programs stored on the memory and runnable on the processor, wherein the processor, when loading and running the one or more computer programs, is caused to perform the method for power management for the vehicle as described in the embodiments.

In another aspect, a computer-readable storage medium is provided. The computer-readable storage medium stores one or more computer programs, wherein the one or more computer programs, when loaded and run by a processor, cause the processor to perform the method for power management for the vehicle as described in the embodiments.

In the solutions according to the embodiments of the present disclosure, upon reception of the translated raw voltage signal and the translated bus power signal of the vehicle, the power state matching the raw voltage signal and the bus power signal is determined, such that the accuracy of the power state is ensured. Then, the power state is transmitted to the at least one software management module in the vehicle via the message publishing and subscribing mechanism, so as to control, by the at least one software management module, the corresponding software modules respectively to execute the operations matching the power state. That is, according to the solutions, the software modules in the vehicle are managed in a distributed manner by different software management modules, and each software management module needs to manage only a small quantity of software modules, such that the operations or services executed by the software modules in the vehicle comply with the power state of the vehicle, and a workload of each software management module is less, so as to reduce the likelihood of. In this way, issues are reduced, and the stability of the power management system in the vehicle and the safety of vehicle operation are ensured.

Additional aspects and advantages of the present disclosure will be set forth in part in the following description, and in part will be obvious from the following description, or will be learned from practice of the present disclosure.

### BRIEF DESCRIPTION OF DRAWINGS

FIG. 1 is a schematic diagram of centralized power management for a cockpit in some practices according to some embodiments of the present disclosure;
FIG. 2 is a flowchart of a method for power management for a vehicle according to some embodiments of the present disclosure;
FIG. 3 is a schematic diagram of a method for distributed power management according to some embodiments of the present disclosure;
FIG. 4 is a schematic diagram of a power state according to some embodiments of the present disclosure;
FIG. 5 is a flowchart of power management according to some embodiments of the present disclosure;
FIG. 6 is a schematic diagram of an apparatus for power management for a vehicle according to some embodiments of the present disclosure; and
FIG. 7 is a schematic structural diagram of a vehicle according to some embodiments of the present disclosure.

### DETAILED DESCRIPTION

Embodiments of the present disclosure are described in detail hereinafter. Examples of the embodiments are illustrated in the accompanying drawings. The same or similar reference numerals indicate the same or similar elements or elements with the same or similar functions throughout the accompanying drawings. The embodiments described hereinafter with reference to the accompanying drawings are exemplary and intended to explain the present disclosure, and should not be construed as limiting the present disclosure.

It should be noted that the raw voltage signal, the bus power signal, or the like involved in the embodiments of the present disclosure are all acquired with full awareness and authorization from users and relevant parties. Furthermore, the collection, use, and processing of the relevant data are required to comply with relevant laws, regulations, and standards of the concerned countries and regions.

A method and an apparatus for power management for a vehicle, a vehicle, and a storage medium according to the embodiments of the present disclosure are described hereinafter with reference to the accompanying drawings. To resolve the issue in some practices mentioned in Background where the excessive workload burden on the power management module leads to chaotic power state management across the entire cockpit system, potentially increasing the fault rate of power management, the present disclosure provides a method for power management for a vehicle. According to the method, a translated raw voltage signal and a translated bus power signal of a vehicle are received, and then a power state matching the raw voltage signal and the bus power signal is determined, such that the accuracy of the power state is ensured. Then, the power state is transmitted to at least one software management module in the vehicle via a message publishing and subscribing mechanism, so as to control, by the at least one software management module, corresponding software modules respectively to execute operations matching the power state. That is, according to the solution, the software modules in the vehicle are managed in a distributed manner by different software management modules, and each software management module needs to manage only a small quantity of software modules, such that the operations or services executed by the software modules in the vehicle comply with the power state of the vehicle, and a workload of each software management module is less. In this way, issues are reduced, and the stability of the power management system in the vehicle and the safety of vehicle operation are ensured.

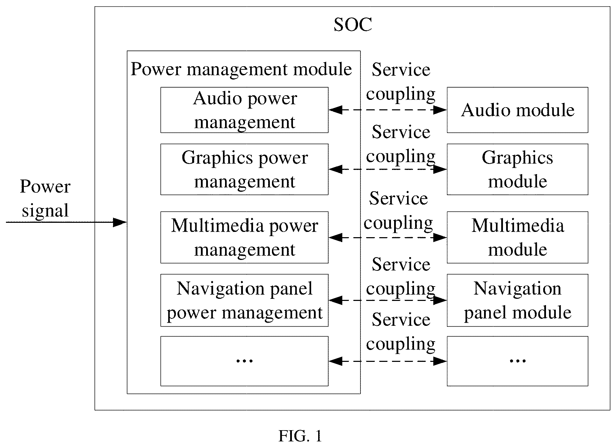

Specifically, prior to description of the embodiments of the present disclosure, a power management solution in some practices is first described. As shown in FIG. 1, FIG. 1 is a schematic diagram of centralized power management for a cockpit in some practices according to some embodiments of the present disclosure. To resolve the power management issues of vehicle cockpit systems, a power management module has been developed and configured in some practices to provide "centralized" management on power states required for operations of software modules involved in the cockpit. Specifically, the power management module in some practices determines an operating state of each software module in the cockpit system of the vehicle based on a power signal of the vehicle, so as to instruct each software module to execute an operation to achieve an operating state that complies with the power signal. For example, the power management module determines operating states of a plurality of software modules, such as an audio module, a graphics module, a multimedia module, and a navigation panel module, based on the power signal of the vehicle, so as to instruct the plurality of software modules, such as the audio module, the graphics module, the multimedia module, and the navigation panel module to execute corresponding operations to achieve operating states that comply with the power signal.

While the centralized management in some practices may resolve complex power state management issues of the cockpit system, some disadvantages are introduced. For example, (1) the power management module needs to manage the power states of all software modules in the vehicle, which places an excessive workload burden on the module and is prone to issues, potentially leading to chaotic power state management across the entire cockpit system; and (2) the development process of the power module is highly coupled with the software modules, such that an in-depth understanding of services of the software modules is required for the development of the power management module, and the development cost and maintenance cost of the power management module. To resolve the technical issues in some practices, the embodiments of the present disclosure provide a method for distributed power management to perform distributed processing for sensing of the power state, switching of operating states and modes, publishing and subscribing of the power state, and transition response of the power state in the cockpit system and reduce the coupling degree between the power management module and the services of the software modules. The specific implementation is described in detail in the following embodiments.

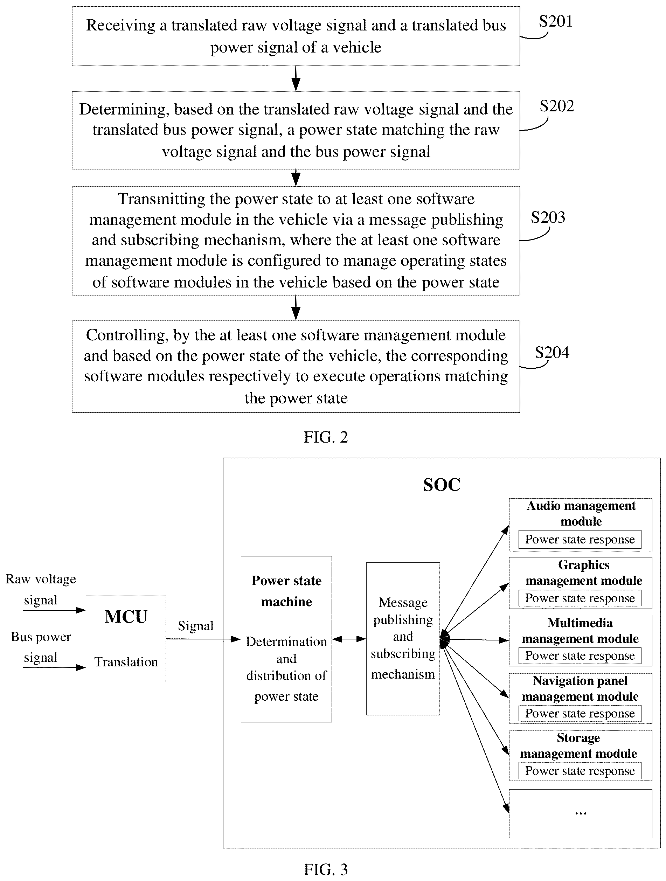

Specifically, FIG. 2 is a schematic flowchart of a method for power management for a vehicle according to some embodiments of the present disclosure. As shown in FIG. 2, the method for power management for the vehicle includes the following processes.

In S201, a translated raw voltage signal and a translated bus power signal of a vehicle are received.

In the embodiments of the present disclosure, a raw voltage signal refers to an unprocessed voltage signal output directly from a power supply (such as a battery or a generator) in the power system of the vehicle. The raw voltage signal reflects an actual voltage state of the power system of the vehicle. A bus power signal refers to a signal used for power supply in a bus system of the vehicle. The bus power signal supplies power for software modules in the vehicle to ensure that each software module operate normally.

In some embodiments, prior to receiving the translated raw voltage signal and the translated bus power signal of the vehicle, the method for power management for the vehicle further includes: acquiring a signal trigger result of the vehicle, where the signal trigger result is used to indicate whether the raw voltage signal and the bus power signal of the vehicle are triggered; and acquiring the translated raw voltage signal and the translated bus power signal by translating, by an MCU, the raw voltage signal and the bus power signal in the case where the signal trigger result indicates that the raw voltage signal and the bus power signal are triggered.

Specifically, in the embodiments of the present disclosure, the hardware system in the vehicle supports collection of the power signal. Therefore, in the case where a power event is triggered, the raw voltage signal and the bus power signal of the vehicle are correspondingly triggered. For example, in the case where a power event such as ignition or shutdown occurs, the MCU in the vehicle first receives the raw voltage signal and the bus power signal of the vehicle, and acquires the translated raw voltage signal and the translated bus power signal by translating the received raw voltage signal and bus power signal. Then, the MCU transmits the translated raw voltage signal and the translated bus power signal to a system on chip (SOC), such that the SOC performs distributed power management on the software modules in the vehicle based on the translated raw voltage signal and the translated bus power signal.

For example, FIG. 3 is a schematic diagram of a method for distributed power management according to some embodiments of the present disclosure. As shown in FIG. 3, the MCU collects the raw voltage signal and the bus power signal of the vehicle, translates the raw voltage signal and the bus power signal, and transmits the translated raw voltage signal and the translated bus power signal to the SOC.

In S202, a power state matching the raw voltage signal and the bus power signal is determined based on the translated raw voltage signal and the translated bus power signal.

In the embodiments of the present disclosure, a matching relationship between the two signals, i.e., the raw voltage signal and the bus power signal, and the power state is preset. Upon reception of the translated raw voltage signal and the translated bus power signal, the power state matching the raw voltage signal and the bus power signal are directly determined from the preset matching relationship.

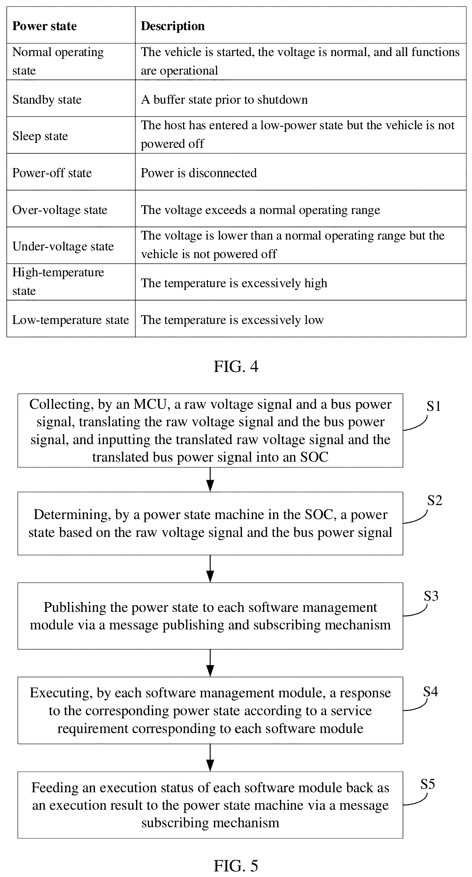

For example, FIG. 4 is a schematic diagram of a power state according to some embodiments of the present disclosure. As shown in FIG. 4, upon receiving the translated raw voltage signal and the translated bus power signal transmitted by the MCU, the SOC determines the power matching the raw voltage signal and the bus power signal. For example, in the case where the translated raw voltage signal and the translated bus power signal indicate that the voltage of the vehicle is operating normally, the matched power state of the vehicle is a normal operating state. Alternatively, in the case where the translated raw voltage signal and the translated bus power signal indicate that the host of the vehicle has entered a low-power state but the vehicle is not powered off, the matched power state of the vehicle is a sleep state. Alternatively, in the case where the translated raw voltage signal and the translated bus power signal indicate that the voltage of the vehicle is lower than a normal operating range but the vehicle is not powered off, the matched power state of the vehicle is an under-voltage state. That is, in the embodiments of the present disclosure, the two signals of the vehicle may be abstracted and defined corresponding to the power states.

Referring to FIG. 3, a power state machine in the SOC receives the translated raw voltage signal and the translated bus power signal, and determines, based on the translated raw voltage signal and the translated bus power signal, the power state matching the raw voltage signal and the bus power signal.

In some embodiments, prior to determining, based on the translated raw voltage signal and the translated bus power signal, the power state matching the raw voltage signal and the bus power signal, the method for power management for the vehicle further includes: classifying the software modules running on the vehicle to acquire at least one category; and configuring a software management module for software modules of each category in the at least one category. Each software management module is configured to manage an operating state of software modules in a corresponding category in the power state.

For example, software modules such as a music player and Bluetooth in the vehicle are classified into an audio category, and software modules such as a video player and a picture display in the vehicle are classified into a multimedia category, and so on. Then, in the present disclosure, a corresponding software management module is configured for each category. For example, an audio management module is configured for the software modules in the audio category, and a multimedia management module is configured for the software modules in the multimedia category. The audio management module and the multimedia management module respectively manage operating states of the software modules in corresponding categories based on the power state, thereby implementing distributed management of the software modules.

In S203, the power state is transmitted to at least one software management module in the vehicle via a message publishing and subscribing mechanism, where the at least one software management module is configured to manage operating states of software modules in the vehicle based on the power state.

In the embodiments of the present disclosure, at least one software module in the vehicle only operates with the power supply from the vehicle. As a receiver of the power state, the at least one software management module is capable of subscribing to the power state to acquire the power state timely after the power state machine determines the power state and adjust the operating states of the managed software modules based on the power state.

In some embodiments, the power state matching the raw voltage signal and the bus power signal is determined by the power state machine in the vehicle, and the method for power management for the vehicle further includes: creating a message publishing module based on the message publishing and subscribing mechanism; and establishing a signal connection between the power state machine and the message publishing module, and transmitting, upon a successful signal connection, the power state determined by the power state machine to the message publishing module. That is, as a publisher of the power state, the power state machine directly transmits the power state to the message publishing module upon determining the power state. Then, the message publishing module transmits the power state to the software management module that has subscribed to the power state.

Specifically, in the embodiments of the present disclosure, upon determination of the power state matching the raw voltage signal and the bus power signal based on the translated raw voltage signal and the translated bus power signal, the SOC builds a power management core distribution mechanism and a message publishing and subscribing publishing mechanism that are of low coupling, such that dynamic transmission and reception between the power management core and the software modules are achieved. Meanwhile, the signal connection is established between the power state machine and the message publishing and subscribing mechanism. Upon the successful signal connection, the power state determined by the power state machine is received via the message publishing and subscribing mechanism, and the power state is distributed to each software management module.

In some embodiments, the method for power management for the vehicle further includes: building a broadcast mechanism for the power state; and transmitting the power state to the at least one software management module in the vehicle via the message publishing and subscribing mechanism includes: broadcasting the power state to the at least one software management module in the vehicle based on the broadcast mechanism and the message publishing and subscribing mechanism.

Further, in the embodiments of the present disclosure, upon reception of the power state of the vehicle via the message publishing and subscribing mechanism, the power state is broadcast based on the broadcast mechanism via the message publishing and subscribing mechanism, such that each software management module in the vehicle receives the power state of the vehicle.

Referring to FIG. 3, a distribution mechanism is configured in the power state machine, such that power state machine transmits the power state to the message publishing module upon determination of the power state. The message publishing and subscribing mechanism is configured in the message publishing module, such that the power state is transmitted, via the message publishing and subscribing mechanism, to a plurality of software management modules such as the audio management module, a graphics management module, the multimedia management module, a navigation management module, and a storage management module, and each software management module controls corresponding software modules to execute operations matching the power state.

In S204, the corresponding software modules are respectively controlled, by the at least one software management module and based on the power state of the vehicle, to execute operations matching the power state.

In the embodiments of the present disclosure, after the power state is broadcast via the message publishing and subscribing mechanism, the software management module that has subscribed to the corresponding power state receives the relevant power state. Then, each software management module generates, for the managed software modules, respective target instructions based on the power state of the vehicle, and transmits the target instructions to the corresponding software modules to instruct the corresponding software modules to execute the operations matching the power state.

For example, in the embodiments of the present disclosure, the audio power state is set to "mute" in response to a target instruction via the audio management module, the navigation system is set to "active" in response to a target instruction via the navigation management module, and the multimedia power state is set to "off" in response to a target instruction via the multimedia management module.

In some embodiments, upon controlling, by the at least one software management module and based on the power state of the vehicle, the corresponding software modules respectively to execute the operations matching the power state, the method for power management for the vehicle further includes: determining, for any software module managed by the at least one software management module, an execution status of the any software module based on an execution result and an expected result of the any software module, where the execution status of the any software module is used to indicate whether the execution of the any software module meets the corresponding expected result; recording the execution result of the any software module in the case where the execution status of the any software module indicates that the execution of the any software module meets the corresponding expected result.

In some embodiments, the any software module is corrected in the case where the execution status of the any software module indicates that the execution of the software module does not meet the corresponding expected result; and upon successful correction, the any software module continues to be controlled, by the software management module corresponding to the any software module, to execute the operation matching the power state, and an execution result of the any software module is recorded.

The expected result may be a response result correspondingly set by those skilled in the art based on the target instruction, which is not specifically limited herein.

Specifically, in the embodiments of the present disclosure, upon acquisition of the execution result of the software module based on the target instruction in response to the corresponding power state, whether the execution result meets the preset result needs to be further determined. In the case where the execution result meets the preset result, that is, the execution result is consistent with the preset result, e.g., the audio power state that the audio management module responds to is "on", the execution result indicates that the audio power state is "on", the power state machine in the SOC is notified to directly record the execution result. In the case where the execution result does not meet the preset result, that is, the execution result is inconsistent with the preset result, e.g., the audio power state that the audio management module responds to is "on", the execution result indicates that the audio power state is "mute" or the execution times out, the execution is considered failed. In this case, the software module is corrected, and upon the correction, the corresponding power response continues to be executed based on the target instruction until the response succeeds, and then the execution result is recorded.

In summary, to enable those skilled in the art to understand the implementation of the embodiments of the present disclosure more clearly, a further description is provided hereinafter with reference to FIG. 5. FIG. 5 is a flowchart of power management according to some embodiments of the present disclosure. As shown in FIG. 5:

In S1, an MCU collects a raw voltage signal and a bus power signal, translates the raw voltage signal and the bus power signal, and inputs the translated raw voltage signal and the translated bus power signal into an SOC.

In S2, a power state machine in the SOC determines a power state based on the raw voltage signal and the bus power signal.

In S3, the power state is published to each software management module via a message publishing and subscribing mechanism.

In S4, each software management module executes a response to the corresponding power state according to a service requirement corresponding to each software module.

In S5, an execution status of each software module is fed back as an execution result to the power state machine via a message subscribing mechanism.

Therefore, in the embodiments of the present disclosure, the coupling degree between power management and the services of the software modules and the development difficulty are reduced using the distributed power management solution, such that the cockpit power management is decentralized, systematic faults are reduced, and possible issues are quickly localized and resolved.

In the method for power management for the vehicle according to the embodiments of the present disclosure, upon reception of the translated raw voltage signal and the translated bus power signal of the vehicle, the power state matching the raw voltage signal and the bus power signal is determined, such that the accuracy of the power state is ensured. Then, the power state is transmitted to the at least one software management module in the vehicle via the message publishing and subscribing mechanism, so as to control, by the at least one software management module, the corresponding software modules respectively to execute the operations matching the power state. That is, according to the solution, the software modules in the vehicle are managed in a distributed manner by different software management modules, and each software management module needs to manage only a small quantity of software modules, such that the operations or services executed by the software modules in the vehicle comply with the power state of the vehicle, and a workload of each software management module is less. In this way issues are reduced, and the stability of the power management system in the vehicle and the safety of vehicle operation are ensured.

In addition, since each software management module needs to manage only a small quantity of software modules, the complexity of managing the software modules based on the power state is reduced, that is, the coupling degree between the managing layers and the managed layers is reduced. Therefore, during the development of power management, corresponding software management modules need to be developed only for services of a small quantity of software modules, and thus the development cost and the maintenance cost are reduced.

Next, an apparatus for power management for a vehicle according to some embodiments of the present disclosure will be described with reference to the accompanying drawings.

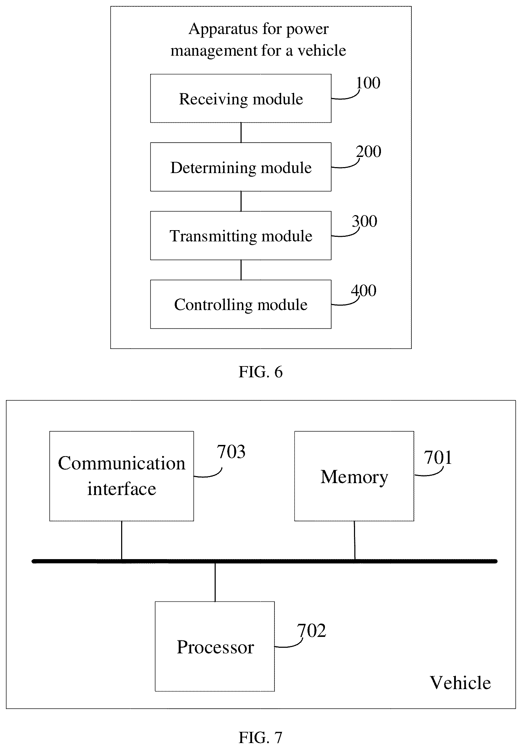

FIG. 6 is a schematic diagram of an apparatus for power management for a vehicle according to some embodiments of the present disclosure. The apparatus for power management for the vehicle is configured to perform the processes of the method for power management for the vehicle. As shown in FIG. 6, the apparatus 10 for power management for the vehicle includes: a receiving module 100, a determining module 200, a transmitting module 300, and a controlling module 400.

The receiving module 100 is configured to receive a translated raw voltage signal and a translated bus power signal of the vehicle.

The determining module 200 is configured to determine, based on the translated raw voltage signal and the translated bus power signal, a power state matching the raw voltage signal and the bus power signal.

The transmitting module 300 is configured to transmit the power state to at least one software management module in the vehicle via a message publishing and subscribing mechanism, where the at least one software management module is configured to manage operating states of software modules in the vehicle.

The controlling module 400 is configured to control, by the at least one software management module and based on the power state of the vehicle, the corresponding software modules respectively to execute operations matching the power state.

In some embodiments, the apparatus further includes:
a translating module, configured to acquire a signal trigger result of the vehicle, where the signal trigger result is used to indicate whether the raw voltage signal and the bus power signal of the vehicle are triggered; and acquire the translated raw voltage signal and the translated bus power signal by translating, by an MCU, the raw voltage signal and the bus power signal in the case where the signal trigger result indicates that the raw voltage signal and the bus power signal are triggered.

In some embodiments, the apparatus further includes:
a configuring module, configured to create a message publishing module based on the message publishing and subscribing mechanism; and establish a signal connection between a power state machine and the message publishing module, and transmit, upon a successful signal connection, the power state determined by the power state machine to the message publishing module.

In some embodiments, the apparatus further includes:
a building module, configured to build a broadcast mechanism for the power state; and
the transmitting module 300, further configured to broadcast the power state to the at least one software management module in the vehicle based on the broadcast mechanism and the message publishing and subscribing mechanism.

In some embodiments, the apparatus further includes:
a processing module, configured to correct the software module in the case where an execution status of the software module indicates that the execution of the software module does not meet a corresponding expected result; and
the controlling module 400, further configured to continue, upon successful correction, to control, by the at least one software management module corresponding to the software module, the software module to execute an operation matching the power state, and record the execution result of the software module.

In the apparatus for power management for the vehicle according to the embodiments of the present disclosure, upon reception of the translated raw voltage signal and the translated bus power signal of the vehicle, the power state matching the raw voltage signal and the bus power signal is determined, such that the accuracy of the power state is ensured. Then, the power state is transmitted to the at least one software management module in the vehicle via the message publishing and subscribing mechanism, so as to control, by the at least one software management module, the corresponding software modules respectively to execute the operations matching the power state. That is, according to the solution, the software modules in the vehicle are managed in a distributed manner by different software management modules, and each software management module needs to manage only a small quantity of software modules, such that the operations or services executed by the software modules in the vehicle comply with the power state of the vehicle, and a workload of each software management module is less. In this way, issues are reduced, and the stability of the power management system in the vehicle and the safety of vehicle operation are ensured.

FIG. 7 is a schematic structural diagram of a vehicle according to some embodiments of the present disclosure. The vehicle may include:
a memory 701, a processor 702, and one or more computer programs stored on the memory 701 and runnable on the processor 702.

The processor 702, when loading and running the one or more computer programs, is caused to perform the method for power management for the vehicle according to the embodiments.

Further, the vehicle further includes:
a communication interface 703, configured for communication between the memory 701 and the processor 702.

The memory 701 is configured to store the one or more computer programs runnable on the processor 702.

The memory 701 may include a high-speed random access memory (RAM), and may further include a non-volatile memory, such as at least one magnetic disk memory.

In the case where the memory 701, the processor 702, and the communication interface 703 are implemented independently, the communication interface 703, the memory 701, and the processor 702 are connected and communicate with each other via a bus. The bus may be an industry standard architecture (ISA) bus, a peripheral component interconnect (PCI) bus, an extended industry standard architecture (EISA) bus, or the like. The bus may be classified as an address bus, a data bus, a control bus, or the like. For ease of representation, the bus is only represented by a thick line in FIG. 7, but this does not mean that only one bus or only one type of bus exists.

Alternatively, in some embodiments, in the case where the memory 701, the processor 702, and the communication interface 703 are integrated and implemented on a single chip, the memory 701, the processor 702, and the communication interface 703 communicate with each other over an internal interface.

The processor 702 may be a central processing unit (CPU), an application-specific integrated circuit (ASIC), or one or more integrated circuits configured to implement the embodiments of the present disclosure.

The embodiments further provide a computer-readable storage medium. The computer-readable storage medium stores one or more computer programs, where the one or more computer programs, when loaded and run by a processor, cause the processor to perform the method for power management for the vehicle as described above.

In the description of the specification, the description referring to the terms "one embodiment," "some embodiments," "an example," "specific examples," "some examples," or the like means that specific features, structures, materials, or characteristics described in connection with the embodiments or examples are included in at least one embodiment or example of the present disclosure. In the specification, the schematic representations of the terms are not necessarily intended to refer to the same embodiment or example. In addition, the specific features, structures, materials, or characteristics described may be combined in a suitable manner in any one or N embodiments or examples. Moreover, various embodiments or examples and features of various embodiments or examples described in the specification may be combined by those skilled in the art in the case where they do not contradict each other.

In addition, the terms "first" and "second" are used for descriptive purposes only and are not to be construed as indicating or implying relative importance or to implicitly indicate the number of technical features indicated. Therefore, the features defined by "first" and "second" may explicitly or implicitly include at least one of the features. In the description of the present disclosure, "N " refers to at least two, e.g., two or three, unless otherwise explicitly defined.

Any process or method description in the flowcharts or otherwise described herein may be understood as representing a module, a segment, or a portion of code that includes one or N executable instructions for implementing customized logical functions or processes. The scope of preferred embodiments of the present disclosure includes additional implementations where functions may be executed out of the order shown or discussed, including in a substantially simultaneous manner or in the reverse order, depending on the functionality involved, as understood by those skilled in the art to which the embodiments of the present disclosure belong.

The logic and/or processes shown in the flowcharts or otherwise described herein, for example, may be considered as a sequenced list of executable instructions for implementing logical functions, and may be embodied in any computer-readable medium, for use by or in combination with an instruction execution system, apparatus, or device (for example, a computer-based system, a system including a processor, or another system that may acquire one or more instructions from the instruction execution system, apparatus, or device and execute the one or more instructions). With respect to the specification, a "computer-readable medium" may be any apparatus that may contain, store, communicate, propagate, or transport one or more programs for use by or in combination with the instruction execution system, apparatus, or device. More specific examples (a non-exhaustive list) of the computer-readable medium include: an electrical connection part (electronic apparatus) with one or N wires, a portable computer disk cartridge (magnetic apparatus), a RAM, a read-only memory (ROM), an erasable programmable read-only memory (EPROM) (or a flash memory), a fiber optic apparatus, and a portable compact disc read-only memory (CDROM). In addition, the computer-readable medium may even be paper or other suitable media on which one or more programs may be printed, as the one or more programs may be acquired electronically, for example, by optically scanning the paper or the other media, followed by editing, interpreting, or processing otherwise if necessary, and then stored in a computer memory.

It should be understood that various parts of the present disclosure may be implemented by using hardware, software, firmware, or a combination thereof. In the embodiments, N processes or methods may be implemented by using software or firmware stored in a memory and executed by a suitable instruction execution system. For example, in the case where the N processes or methods are implemented by using hardware, as in other embodiments, the N processes or methods may be implemented by using any one or a combination of the following technologies well-known in the art: a discrete logic circuit having logic gates for implementing logical functions on data signals, an application-specific integrated circuit having appropriate combinational logic gates, a programmable gate array (PGA), a field-programmable gate array (FPGA), or the like.

Those of ordinary skill in the art may understand that all or part of the processes in the method according to the embodiments may be implemented by related hardware as instructed by one or more programs. The one or more programs may be stored in a computer-readable storage medium. When the one or more programs are run, the execution of one or a combination of the processes in the method embodiments is included.

In addition, the various functional units in the embodiments of the present disclosure may be integrated into one processing module, or the various units may exist physically alone, or two or more units may be integrated into one module. The integrated module may be implemented in the form of hardware, or may be implemented in the form of a software functional module. The integrated module may be stored in a computer-readable storage medium in the case where the integrated module is implemented in the form of the software functional module and sold or used as an independent product.

The storage medium mentioned may be a read-only memory, a magnetic disk, an optical disk, or the like. While the embodiments of the present disclosure have been shown and described above, it should be understood that the embodiments are exemplary and should not be construed as limiting the present disclosure and that changes, modifications, substitutions, and variations may be made to the embodiments by those of ordinary skill in the art within the scope of the present disclosure.

## Claims

1. A method for power management for a vehicle, comprising:
receiving a translated raw voltage signal and a translated bus power signal of the vehicle;
determining, based on the translated raw voltage signal and the translated bus power signal, a power state matching the raw voltage signal and the bus power signal;
transmitting the power state to at least one software management module in the vehicle via a message publishing and subscribing mechanism, wherein the at least one software management module is configured to manage operating states of software modules in the vehicle based on the power state; and
controlling, by the at least one software management module and based on the power state of the vehicle, the corresponding software modules respectively to execute operations matching the power state.

2. The method for power management for the vehicle according to claim 1, wherein prior to receiving the translated raw voltage signal and the translated bus power signal of the vehicle, the method further comprises:
acquiring a signal trigger result of the vehicle, wherein the signal trigger result is used to indicate whether a raw voltage signal and a bus power signal of the vehicle are triggered; and
acquiring the translated raw voltage signal and the translated bus power signal by translating, by a microcontroller unit, the raw voltage signal and the bus power signal in a case where the signal trigger result indicates that the raw voltage signal and the bus power signal are triggered.

3. The method for power management for the vehicle according to claim 1, wherein prior to determining, based on the translated raw voltage signal and the translated bus power signal, the power state matching the raw voltage signal and the bus power signal, the method further comprises:
classifying the software modules running on the vehicle to acquire at least one category; and
configuring a software management module for software modules of each category in the at least one category, wherein each software management module is configured to manage an operating state of software modules in a corresponding category in the power state.

4. The method for power management for the vehicle according to claim 1, wherein the power state matching the raw voltage signal and the bus power signal is determined by a power state machine in the vehicle, and the method further comprises:
creating a message publishing module based on the message publishing and subscribing mechanism; and
establishing a signal connection between the power state machine and the message publishing module, and transmitting, upon a successful signal connection, the power state determined by the power state machine to the message publishing module.

5. The method for power management for the vehicle according to claim 1, further comprising:
building a broadcast mechanism for the power state; and
transmitting the power state to the at least one software management module in the vehicle via the message publishing and subscribing mechanism comprises:
broadcasting the power state to the at least one software management module in the vehicle based on the broadcast mechanism and the message publishing and subscribing mechanism.

6. The method for power management for the vehicle according to claim 1, wherein upon controlling, by the at least one software management module and based on the power state of the vehicle, the corresponding software modules respectively to execute the operations matching the power state, the method further comprises:
determining, for any software module managed by the at least one software management module, an execution status of the any software module based on an execution result and an expected result of the any software module, wherein the execution status of the any software module is used to indicate whether execution of the any software module meets a corresponding expected result; and
recording the execution result of the any software module in a case where the execution status of the any software module indicates that the execution of the any software module meets the corresponding expected result.

7. The method for power management for the vehicle according to claim 6, further comprising:
correcting the any software module in a case where the execution status of the any software module indicates that the execution of the any software module does not meet the corresponding expected result, continuing, upon successful correction, to control, by the at least one software management module corresponding to the any software module, the any software module to execute an operation matching the power state, and recording the execution result of the any software module.

8. An apparatus for power management for a vehicle, comprising:
a receiving module, configured to receive a translated raw voltage signal and a translated bus power signal of the vehicle;
a determining module, configured to determine, based on the translated raw voltage signal and the translated bus power signal, a power state matching the raw voltage signal and the bus power signal;
a transmitting module, configured to transmit the power state to at least one software management module in the vehicle via a message publishing and subscribing mechanism, wherein the at least one software management module is configured to manage operating states of software modules in the vehicle based on the power state; and
a controlling module, configured to control, by the at least one software management module and based on the power state of the vehicle, the corresponding software modules respectively to execute operations matching the power state.

9. A vehicle, comprising: a memory, a processor, and one or more computer programs stored on the memory and runnable on the processor, wherein the processor, when loading and running the one or more computer programs, is caused to perform the method for power management for the vehicle as defined in any one of claims 1 to 7.

10. A computer-readable storage medium, storing one or more computer programs, wherein the one or more computer programs, when loaded and run by a processor, cause the processor to perform the method for power management for the vehicle as defined in any one of claims 1 to 7.
